(19) **Europäisches Patentamt**
**European Patent Office**
**Office européen des brevets**

(11) **EP 0 971 219 B1**

(12) **FASCICULE DE BREVET EUROPEEN**

(45) Date de publication et mention
de la délivrance du brevet:
**17.06.2009 Bulletin 2009/25**

(51) Int Cl.:
***G01J 5/20*** (2006.01)

(21) Numéro de dépôt: **99401653.3**

(22) Date de dépôt: **02.07.1999**

(54) **Détecteur thermique à amplification par effet bolométrique**

Thermischer Detektor mit Verstärkung durch bolometrischen Effekt

Thermal detector with amplification by bolometric effect

(84) Etats contractants désignés:
**DE GB IT**

(30) Priorité: **06.07.1998 FR 9808613**

(43) Date de publication de la demande:
**12.01.2000 Bulletin 2000/02**

(73) Titulaire: **COMMISSARIAT A L'ENERGIE ATOMIQUE**
**75015 Paris (FR)**

(72) Inventeurs:
• **Ouvrier-Buffet, Jean-Louis**
**74330 Sevrier (FR)**
• **Yon, Jean-Jacques**
**38360 Sassenage (FR)**

(74) Mandataire: **Poulin, Gérard et al**
**Brevalex**
**3, rue du Docteur Lancereaux**
**75008 Paris (FR)**

(56) Documents cités:
**DE-A- 4 403 947          GB-A- 2 207 501**
**US-A- 2 865 202**

• **HAMID M: "POLYCONDUCTOR BEAM POWER SENSOR" INTERNATIONAL JOURNAL OF ELECTRONICS, vol. 71, no. 2, 1 août 1991 (1991-08-01), pages 363-381, XP000260697**
• **PATENT ABSTRACTS OF JAPAN vol. 008, no. 188 (P-297), 29 août 1984 (1984-08-29) -& JP 59 079128 A (HORIBA SEISAKUSHO:KK), 8 mai 1984 (1984-05-08)**

**Description**

**DOMAINE TECHNIQUE**

La présente invention concerne un détecteur thermique et, plus précisément, un détecteur de type thermique, non refroidi.

**ÉTAT DE LA TECHNIQUE ANTÉRIEURE**

GB 1267848 décrit un détecteur de rayonnement infrarouge.

Un détecteur connu de type thermique, non refroidi, comprend un thermomètre dont une propriété électrique varie en fonction de la température. Cette dernière varie elle-même lorsqu'un rayonnement, qui est caractéristique de la température et de l'émissivité d'un corps observé et dont la longueur d'onde peut appartenir à la bande III (intervalle de longueur d'onde 8 $\mu$m à 12 $\mu$m), est absorbé par un moyen approprié qui est thermiquement couplé au thermomètre, comme par exemple une couche absorbante ou une antenne formée sur ce thermomètre.

Les détecteurs connus, de type thermique, non refroidis, se différencient par le mode de conversion en signal électrique de la variation de température due au rayonnement incident et l'on connaît en particulier des détecteurs bolométriques dont les thermomètres utilisent des matériaux résistifs.

Plus précisément, les thermomètres des détecteurs bolométriques connus comprennent des éléments dont la résistivité varie en fonction de la température et qui sont polarisés (《 biased 》) avec une source de tension ou de courant, en mode continu ou pulsé. Les variations de résistivité et donc de résistance électrique engendrent des variations de tension ou de courant aux bornes de ces détecteurs.

Voir par exemple "Polyconductor beam power sensor", M. Hamid, Int. J. of Electronics, vol. 71, no. 2, p 363-381, GB 2 207 501 ou DE 44 03 947.

Pour les matériaux à coefficient de température négatif comme par exemple les semiconducteurs, la mesure à tension constante, lorsque celle-ci dépasse une valeur critique, conduit à l'auto-destruction d'un détecteur bolométrique si une diminution de la polarisation n'intervient pas. En effet, avec une polarisation en tension (V), la dissipation de puissance ($P=V^2/R$) entraîne une diminution de la résistance R du détecteur, ce qui augmente la puissance dissipée, d'où un emballement thermique. En réalité, il existe une température de fonctionnement-limite au-delà de laquelle le détecteur s'emballe lorsqu'il est polarisé par une tension continue. Au demeurant, le détecteur présente ses meilleures performances en termes de réponse au voisinage de ce régime d'instabilité.

Les bolomètres comprenant des matériaux à coefficient de température positif, comme par exemple les métaux, présentent un comportement analogue lorsqu'ils sont polarisés par une source de courant constant. En effet, avec une polarisation en courant (I), la dissipation de puissance ($P=RI^2$) entraîne une augmentation de la résistance R du détecteur, ce qui augmente la puissance dissipée.

**EXPOSÉ DE L'INVENTION**

La présente invention a pour objet un détecteur thermique, de type non refroidi, dont les performances sont sensiblement supérieures à celles des détecteurs connus de ce genre et qui utilise pour ce faire le phénomène d'emballement thermique mentionné plus haut (mais convenablement limité pour ne pas conduire à la destruction du détecteur).

De façon précise, la présente invention a pour objet un détecteur thermique tel que défini dans la revendication 1.

L'optimisation du thermomètre de ce détecteur et du mode de lecture de ce thermomètre conduit à un fort accroissement de réponse et à une forte réduction de bruit par rapport aux détecteurs thermiques connus, du type non refroidi.

Selon un mode de réalisation préféré du détecteur objet de l'invention, l'élément résistif comprend au moins une couche résistive et les moyens de polarisation comprennent deux électrodes, l'ensemble formé par cette couche et ces deux électrodes étant électriquement isolé du thermomètre.

Selon un premier mode de réalisation particulier, les électrodes sont placées d'un même côté de la couche résistive et, selon un deuxième mode de réalisation particulier, elles sont placées de part et d'autre de cette couche.

L'élément résistif peut avoir un coefficient de température négatif, la polarisation étant alors une polarisation en tension.

Dans ce cas, l'élément résistif peut être fait d'un matériau semiconducteur qui est de préférence choisi parmi les oxydes de vanadium, le silicium amorphe et le SiGe amorphe.

En variante, l'élément résistif peut avoir un coefficient de température positif, la polarisation étant alors une polarisation en courant.

Selon un mode de réalisation particulier du détecteur objet de l'invention, le thermomètre est choisi dans le groupe comprenant les thermopiles, les jonctions p-n, les jonctions ou barrières de Schottky, les résistances électriques, les thermomètres ferroélectriques, les thermomètres pyroélectriques, les thermomètres à déformation mécanique, notamment les thermomètres pneumatiques, et les thermomètres à au moins une micropointe.

De préférence, le thermomètre est élaboré par une technique de microélectronique pour avoir une faible capacité calorifique.

De préférence également, l'élément résistif est élaboré par une technique de microélectronique.

Selon un mode de réalisation préféré de l'invention, le détecteur a une structure de micropont.

L'invention concerne aussi un détecteur thermique à structure matricielle comprenant au moins deux détecteurs thermiques à amplification bolométrique conformes à l'invention.

Les détecteurs conformes à l'invention s'appliquent d'une manière générale aux mesures de températures et en particulier à la détection infrarouge, chaque élément résistif étant alors prévu pour subir un échauffement au moyen d'un rayonnement infrarouge, ainsi qu'à la détection de rayonnements nucléaires (par exemple neutrons, rayons X, rayons $\gamma$).

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- les figures 1A, 1B, 2,3, 4, 5A et 5B sont des vues schématiques de divers modes de réalisation particuliers du détecteur thermique objet de 1' invention,
- la figure 6 est une vue schématique d'un détecteur thermique conforme à l'invention, ayant une structure matricielle, et
- les figures 7 et 8 illustrent schématiquement des détecteurs thermiques conformes à l'invention, ayant une structure de micropont.

## EXPOSÉ DÉTAILLÉ DE MODES DE RÉALISATION PARTICULIERS

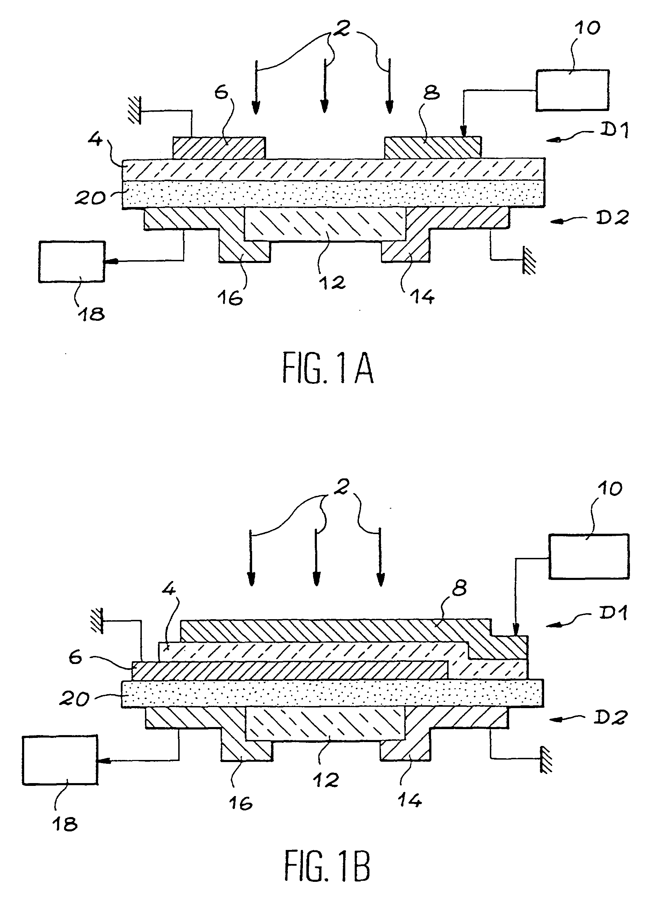

La figure 1A est une vue schématique d'un mode de réalisation particulier du détecteur thermique objet de l'invention, qui est formé sur un substrat non représenté et qui est isolé thermiquement de ce substrat.

Dans un tel détecteur, on utilise le phénomène d'emballement des bolomètres afin de réaliser une amplification de l'échauffement de ce détecteur, par exemple induit par un rayonnement infrarouge incident 2. De plus, on dissocie cette fonction d'amplification de la fonction de mesure de température. En considérant par exemple une scène (un ou plusieurs objets non représentés) dont on veut mesurer la température, l'amplification de l'échauffement se traduit par l'équation suivante

$$dT = A(T).dT_s \qquad\qquad (1)$$

dans laquelle A(T) représente le gain de température qui dépend de la température T de l'élément résistif polarisé par une source de tension ou une source de courant, en mode continu ou en mode pulsé, pour amplifier l'échauffement, $dT_s$ représente la variation de température de la scène (qui émet le rayonnement infrarouge 2) et dT représente la variation de la température de l'élément résistif 4 du détecteur de la figure 1A.

Ce détecteur comprend deux dispositifs thermiquement couplés D1 et D2. Le dispositif D1, qui a une fonction d'amplification d'échauffement, comprend un élément résistif 4 formé par une couche semiconductrice ou métallique munie de deux électrodes 6 et 8. L'électrode 6 est mise à la masse et l'électrode 8 est polarisée par une source de tension ou de courant 10, ce gui permet l'amplification de l'échauffement du dispositif D1 engendré par le rayonnement 2. Ce rayonnement est absorbé par un moyen non représenté thermiquement couplé au dispositif D1 ou simplement absorbé par l'élément résistif 4 et les électrodes 6 et 8.

On précise que lorsque l'élément 4 est semiconducteur (respectivement métallique), la source 10 est une source de tension (respectivement une source de courant), cette tension (ou ce courant) ne dépassant pas une valeur critique (déterminable par l'homme du métier) au-delà de laquelle le dispositif D1 serait détérioré.

Le dispositif D2, qui a uniquement pour fonction de mesurer une température ou des fluctuations de température, comprend un thermomètre 12 muni de deux électrodes 14 et 16, l'électrode 14 étant mise à la masse et l'électrode 16 étant reliée à une entrée d'un circuit de lecture 18 des signaux fournis par le thermomètre en vue de connaître la température de la scène observée.

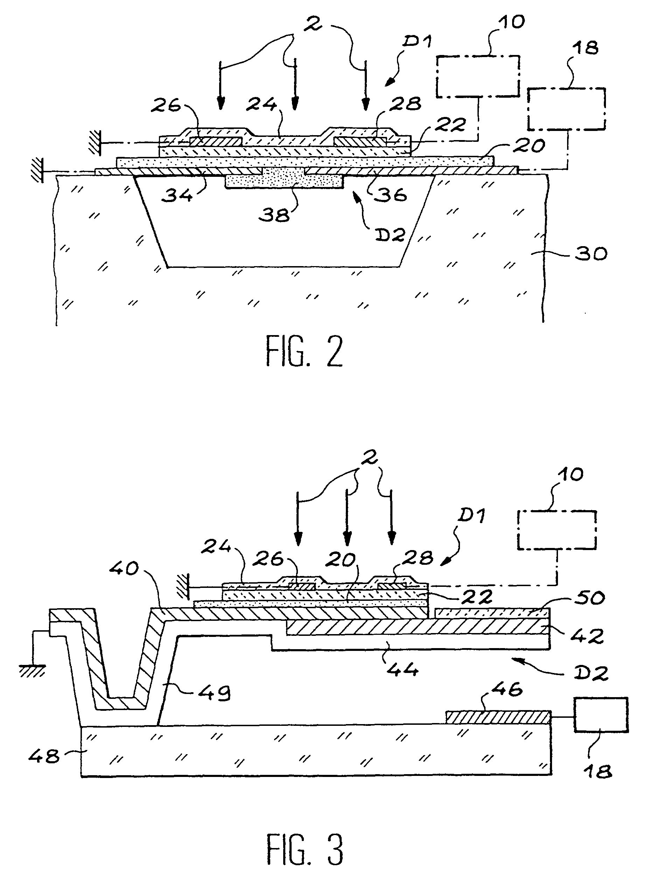

La source 10 et le circuit de lecture 18 peuvent être intégrés au substrat (référencé 30, 48, 56, 64, 70, 92 respectivement sur les figures 2, 3, 4, 5A (ainsi que 5B et 6), 7 et 8). Par la suite, tout contact du détecteur avec le substrat peut être considéré comme un contact mécanique et/ou électrique.

Les dispositifs D1 et D2 sont respectivement formés sur deux faces opposées d'une couche électriquement isolante mais thermiquement conductrice 20.

Les électrodes 6 et 8 sont coplanaires : elles sont placées sur une même face de la couche métallique ou semiconductrice 4. Cependant il est possible d'adopter une autre configuration (figure 1B) dans laquelle les électrodes 4 et 6 sont en regard l'une de l'autre : elles sont alors placées sur deux faces opposées de cette couche semiconductrice ou métallique 4.

La fonction d'amplification résulte directement du comportement électro-thermique du dispositif de type résistif D1 et ce comportement est décrit par l'équation de chaleur.

Considérons à titre d'exemple un dispositif D1 formé par une thermistance semiconductrice de résistance $R_b$ qui est polarisée par une impulsion de tension. Les variations de la résistance en fonction de la température sont représentées par l'équation suivante :

$$R_b(T) \;=\; R_b(T_0)e^{(1/T-1/T_0)\,(E_a/K)} \qquad\qquad (2)$$

Dans cet exemple l'équation de la chaleur s'écrit :

$$C\,\frac{dT}{dt} \;+\; G(T - T_c) \;=\; \frac{V_{Pol}^2 R_b(T_0)e^{(1/T-1/T_0)\,(E_a/K)}}{\left(R_b(T_0)e^{(1/T-1/T_0)\,(E_a/K)} \;+\; R_1\right)^2} \;+\; a(T_s^4 - T^4) \qquad (3)$$

Dans ces équations (2) et (3) C est la capacité calorifique du détecteur, G est la conductance thermique de ce détecteur, t représente le temps, T représente la température de fonctionnement de la thermistance, $T_0$ représente une température de référence c'est-à-dire par exemple la température du substrat, $T_s$ est la température de la scène, a est le coefficient de couplage optique du détecteur thermique, $V_{pol}$ est la tension de polarisation, $R_1$ est une éventuelle résistance de charge ($R_1$ supérieure ou égal à 0) que l'on peut connecter en série à la résistance Rb, $E_a$ est l'énergie d'activation du matériau constituant la résistance Rb et K est la constante de Boltzmann.

L'équation (3) n'a pas de solution analytique et doit être résolue numériquement. Elle met clairement en évidence l'amplification de la réponse $dT/dT_s$ en fonction de $V_{pol}$ et de la durée de l'impulsion c'est-à-dire de la température de la thermistance à la fin de cette impulsion. Une impulsion de courant appliquée à un élément résistif de type métallique conduit aux mêmes conclusions.

Ce phénomène d'amplification se produit également avec une polarisation continue mais le détecteur est alors soumis à un risque de destruction par emballement thermique. Il convient donc de réduire l'excursion de tension ou de courant, ce qui limite par ailleurs le gain $dT/dT_s$ à des valeurs relativement faibles.

Ce qui précède montre qu'un élément résistif convenablement polarisé entraîne une amplification sensible de sa variation de température par rapport à celle que l'on enregistrerait avec le même élément résistif non polarisé, en réponse à une variation identique de la température de la scène. Le gain, qui peut aller de 2 (en mode continu) à 1000 (en mode pulsé) amplifie la réponse du thermomètre.

Le détecteur thermique conforme à l'invention, qui est schématiquement représenté sur la figure 2, comprend un élément résistif formé de deux couches semiconductrices empilées 22 et 24 enfermant deux électrodes de polarisation 26 et 28, l'ensemble formant un dispositif d'amplification D1. Ces deux couches ont le meme type de conductivite (N ou P) ou l'une est de type N ou P tandis que l'autre est intrinsèque.

Au lieu de cela on pourrait utiliser un dispositif D1 à une seule couche semiconductrice ou métallique et deux électrodes coplanaires, comme sur la figure 1A, ou un dispositif D1 à une seule couche semiconductrice ou métallique et deux électrodes en regard l'une de l'autre, comme sur la figure 1B.

Ce dispositif D1 est formé sur une face d'une couche électriquement isolante mais thermiquement conductrice 20 sur l'autre face de laquelle se trouve un dispositif D2 comprenant un thermomètre.

Le détecteur de la figure 2 est formé par un substrat 30 et a une configuration de micropont. On reviendra par la suite sur ce type de configuration.

Dans le cas de la figure 2 le thermomètre est une thermopile constituée d'une série de thermocouples : les deux thermocouples 34 et 36 dans l'exemple représenté constituant les jonctions chaudes, sont électriquement isolés l'un de l'autre sur la couche 20 par un élément 38 électriquement isolant par exemple en SiO, $SiO_2$ ou SiN (qui recouvre également ces jonctions chaudes, comme on le voit sur la figure 2). Les jonctions froides de la thermopile (non représentées) sont mises à la température du substrat 30 en dehors de la couche 20.

Le rayonnement infrarouge incident 2 provoque l'échauffement de l'élément résistif. Cet échauffement est amplifié (comme on l'a vu plus haut, grâce à une source de polarisation 10) et se transmet à travers la couche 20 aux jonctions chaudes des thermocouples qui s'échauffent. Chaque thermocouple convertit l'élévation de température en une tension de sortie et, en montant les thermocouples 34, 36 en série, la tension résultante est la somme de ces tensions de sortie. On connecte alors la thermopile (jonctions froides et chaudes) au circuit de lecture 18 pour lire la température.

A titre d'exemple, la thermopile est élaborée à partir de couches minces faites à partir de métaux, de semi-métaux (par exemple Sb, Bi ou Te) ou de semiconducteurs (par exemple $Bi_2Te_3$ ou polysilicium).

Dans un autre détecteur thermique conforme à l'invention (non représenté), le dispositif D2 de la figure 2 est remplacé par une jonction semiconductrice PN (ou NP) ou par une barrière de Schottky dont on mesure alors le courant de saturation pour former le signal qui est lu par le circuit de lecture 18. On peut aussi remplacer la thermopile de la figure 2 par une résistance métallique ou semiconductrice dont la configuration et la polarisation sont choisies pour optimiser les performances du thermomètre.

Le détecteur conforme à l'invention, qui est schématiquement représenté sur la figure 3, est un détecteur à déformation mécanique amplifiée par effet bolométrique. Le dispositif D1 de ce détecteur est identique à celui de la figure 2 (ou à l'une des variantes de celui-ci qui ont été mentionnées plus haut). Le dispositif D2 du détecteur de la figure 3 est un bilame formé de deux lames 40 et 42, la lame 40 étant d'un côté en contact avec la face correspondante de la couche 20 et de l'autre côté avec l'autre lame 42.

Les matériaux des lames 40 et 42 sont par exemple des matériaux usuels en microélectronique comme par exemple Al, SiO, SiN et SiC.

Le bilame est associé à un condensateur, une armature 44 de ce condensateur étant fixée contre les lames 40 et 42 comme on le voit sur la figure 3 et l'autre armature 46 reposant sur un substrat 48 par exemple en Si. On voit que l'armature 44 et la lame 40 en contact l'une avec l'autre se prolongent au-delà de la couche 20 (partie gauche de la figure 3) par un bras commun 49 de fixation au substrat 48. Le diélectrique du condensateur peut être l'air ou le vide (《 vacuum 》) (et dans ce dernier cas le dispositif est mis sous vide).

L'échauffement du dispositif D1 est encore transmis à travers la couche 20 au bilame qui se déforme sous l'effet de la chaleur et provoque une variation de la capacité du condensateur auquel il est fixé. L'armature 44 est mise à la masse tandis que l'armature 46 formée sur le substrat 48 est reliée à une entrée du circuit de lecture 18 qui permet ainsi de mesurer la température.

La réponse du dispositif D2 de la figure 3 est directement liée au carré de la longueur du bilame, ce qui est pénalisant en termes de stabilité mécanique de la structure et de réduction de la taille de points élémentaires dans le cas d'un détecteur matriciel. L'adjonction du dispositif D1 conforme à l'invention remédie à ces inconvénients.

Sur la figure 3, la référence 50 représente une couche par exemple en TiN, placée sur une partie de la lame 42, qui dépasse de la lame 40, et qui a pour fonction d'absorber le rayonnement incident 2, augmentant ainsi l'échauffement du bilame.

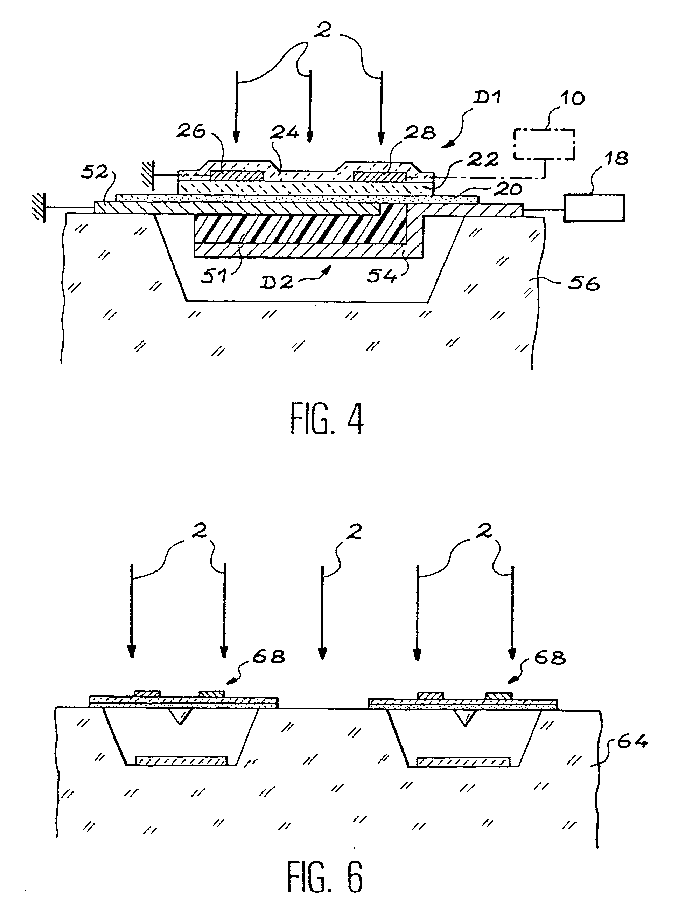

Le détecteur conforme à l'invention, qui est schématiquement représenté sur la figure 4, a le même dispositif D1 que le détecteur de la figure 2 (où l'une des variantes de ce dispositif D1) et son dispositif D2 comprend un thermomètre de type ferroélectrique. Ce thermomètre comprend un élément 51 en matériau ferroélectrique et deux armatures 52 et 54 formant les deux électrodes du thermomètre. L'armature 52 est en contact avec la couche électriquement isolante et thermiquement conductrice 20. L'élément 51 est compris entre les deux armatures et vient également au contact de la couche 20, l'autre armature 54 longeant cet élément pour venir aussi au contact de la couche 20 comme on le voit sur la figure 4. Le détecteur de la figure 4 a aussi une structure de micropont et repose par les extrémités respectives des armatures 52 et 54 sur un support 56 par exemple en Si, les armatures 52 et 54 étant isolées électriquement l'une de l'autre. L'armature 54 fournit le signal du thermomètre qui est lu par le circuit de lecture 18, l'autre armature 52 étant mise à la masse.

Un thermomètre de type ferroélectrique a deux modes de fonctionnement. En effet, lors d'une élévation de température, la polarisation spontanée d'un matériau ferroélectrique décroît pour devenir nulle à la température de Curie. La permittivité relative du matériau atteint un maximum dans cette région de transition de phase.

1) En mode pyroélectrique, on utilise la décroissance de la polarisation spontanée quand la température du thermomètre augmente et cela se traduit par une variation de la quantité de charge sur les électrodes constituées par les armatures 52 et 54 formant un condensateur avec l'élément ferroélectrique 51. Cette variation peut être lue principalement par l'intermédiaire du courant de retour à l'équilibre électrique ou par l'intermédiaire de la variation de tension entre ces électrodes 52 et 54. Deux critères définissent le mode de fonctionnement d'un thermomètre de type ferroélectrique en mode pyroélectrique, à savoir : (a) la valeur de la température de fonctionnement par rapport au point de Curie et (b) la valeur du champ électrique extérieur appliqué à l'échantillon.

2) En ce qui concerne le mode de fonctionnement en bolomètre capacitif du thermomètre ferroélectrique, on travaille dans ce mode au voisinage de la température de Curie et en présence d'un champ électrique qui stabilise la polarisation. Dans cette configuration la constante diélectrique varie rapidement avec la température.

Pour bénéficier pleinement de l'effet d'amplification, les dispositifs D1 et D2 du détecteur de la figure 4 doivent être compatibles, en particulier en ce qui concerne la température de fonctionnement. Cette adaptation peut être réalisée en jouant sur les caractéristiques des matériaux (température de Curie du dispositif D2 et coefficient de température du dispositif D1) et la configuration du détecteur (en particulier conductance thermique et valeur de la résistance du dispositif D1).

En tant que matériau ferroélectrique on peut utiliser un matériau cristallin tel que TGS ou $LiTaO_3$ ou une céramique telle que $PbTiO_3$ ou PZT ou un polymère semi-cristallin tel que PVDF ou PVDF-TrFE.

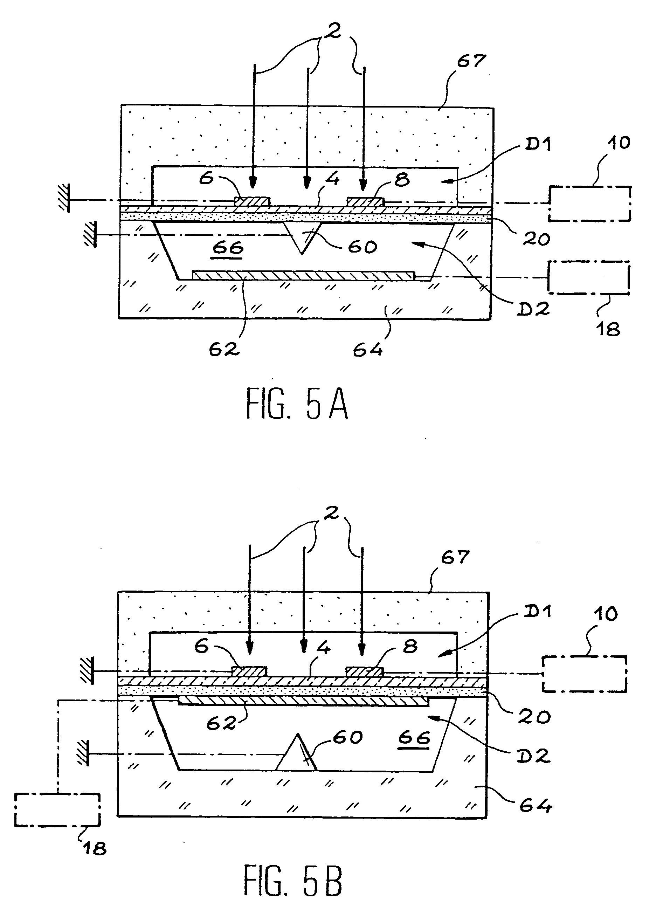

Le détecteur thermique conforme à l'invention, qui est schématiquement représenté sur la figure 5A, comprend un dispositif D1 du genre de celui de la figure 1A et un dispositif D2 comprenant un thermomètre qui comprend une micropointe 60 par exemple en Si recouvert d'un matériau métallique (Au ou Cr par exemple), formée sur la face de la couche 20 correspondant au dispositif D2, ainsi qu'une électrode 62 (couche conductrice) disposée en regard de la micropointe 60 sur un substrat électriquement isolant 64 par exemple en silicium oxydé ou passivé. Dans l'exemple représenté, le détecteur thermique a une structure de micropont : la couche 20 (qui sépare les dispositifs D1 et D2) repose par ses extrémités sur le substrat 64 qui comporte une cavité sous vide 66 en regard de la micropointe, l'électrode 62 reposant au fond de cette cavité.

La micropointe est mise par exemple à la masse et l'électrode 62 est reliée au circuit de lecture 18 pour la mesure de température. Au lieu d'une seule micropointe, on peut utiliser une pluralité de micropointes électriquement reliées les unes aux autres et formées sur la même face que la micropointe 60 en regard de l'électrode 62.

En variante (figure 5B), l'électrode 62 est formée sur la couche 20 tandis que la micropointe ou les micropointes sont formées au fond de la cavité 66 formée dans le substrat 64.

Lors de l'amplification de l'échauffement du dispositif D1, la couche mince 20 se déforme et la distance entre la micropointe 60 et l'électrode 62 est modifiée. Il en résulte par exemple une variation du courant lorsque la différence de potentiel entre la micropointe et l'électrode 62 est fixée grâce à des moyens de polarisation non représentés.

Un détecteur thermique conforme à l'invention peut être encapsulé sous vide ou sous un gaz. Le détecteur est alors encapsulé dans un boîtier comportant une fenêtre transparente dans la gamme de longueur d'onde des rayonnements à détecter, par exemple la bande III. Dans le cas des figures 5A et 5B, un couvercle 67 enferme de façon étanche le dispositif D1. Dans l'espace compris entre ce couvercle et la couche semiconductrice ou métallique du dispositif D1 se trouve un gaz (par exemple de l'air) dont la conduction thermique est faible. Ce couvercle par exemple en germanium est transparent au rayonnement infrarouge à détecter 2 et sert donc de fenêtre.

Dans le cas d'une encapsulation sous gaz, on peut réaliser ainsi un détecteur à thermomètre pneumatique : la dilatation du gaz par échauffement par contact avec le dispositif D1 entraîne une déformation de la couche 20. Cette déformation peut être détectée par un moyen de détection à laser ou autre dispositif optique permettant d'obtenir le signal électrique qui est ensuite lu. Si l'on remplace ce moyen de détection par une micropointe et l'électrode associée tel que décrit précédemment, le détecteur thermique sera amélioré. En effet, la pression exercée par le gaz chauffé provoquera une déformation d'autant plus importante de la couche 20 que l'autre face de cette couche se trouve dans le vide.

La figure 6 illustre schématiquement la possibilité de réaliser un détecteur thermique conforme à l'invention ayant une architecture matricielle permettant de faire de l'imagerie, en particulier de l'imagerie infrarouge (comme dans la demande de brevet français n° 95.07151 du 15 juin 1995 et dans la demande de brevet français n° 96.10005 du 8 Août 1996). On peut ainsi réaliser des imageurs infrarouges monolithiques fonctionnant à la température ambiante en connectant directement un tel détecteur matriciel à un circuit de multiplexage en silicium de type CMOS ou CCD. On voit sur la figure 6 un exemple d'une telle matrice de détection dont on a seulement représenté deux détecteurs identiques 68 du genre de celui de la figure 5A et formés sur le même substrat 64.

L'utilisation de microstructures en couche mince permet de réaliser une isolation thermique efficace de la matrice de détection par rapport au substrat 64 en silicium ou au circuit de multiplexage. Ces microstructures peuvent être par exemple élaborées suivant différents procédés qui conduisent à la fabrication de microponts et permettent d'obtenir des détecteurs de meilleurs qualité.

On précise que pour fabriquer les éléments résistifs des dispositifs D1 ainsi que les thermomètres des dispositifs D2 on utilise avantageusement des techniques de la microélectronique.

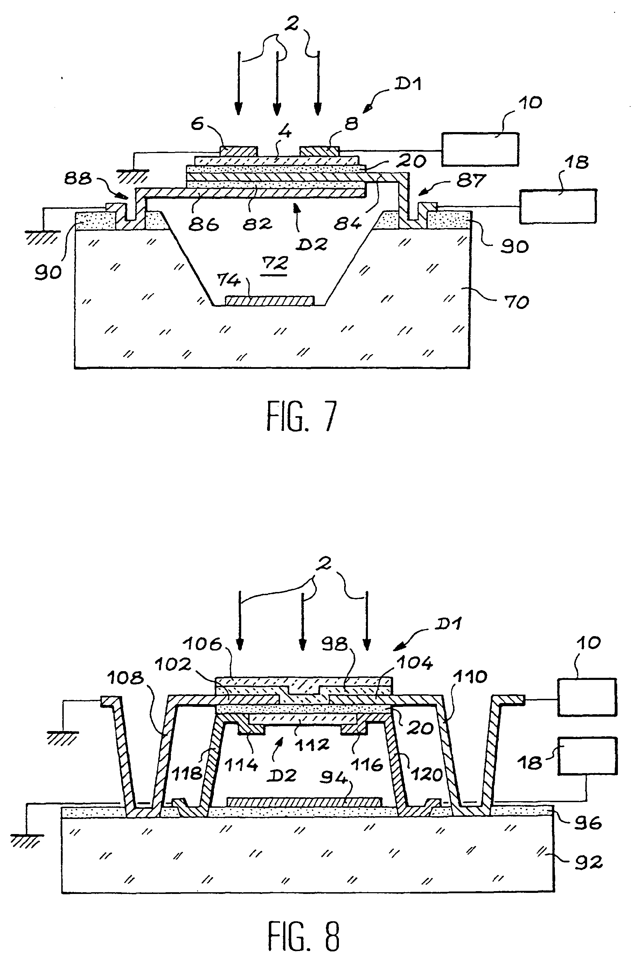

Les figures 7 et 8 illustrent schématiquement la fabrication de détecteurs thermiques conformes à l'invention, ayant une configuration de micropont.

On voit sur la figure 7 un substrat en silicium 70 muni d'un circuit de lecture non représenté et comprenant une cavité 72 au fond de laquelle se trouve une couche réflectrice 74 apte à réfléchir le rayonnement infrarouge incident que l'on veut détecter 2. Le détecteur thermique conforme à l'invention est fixé au substrat, au-dessus de cette cavité, en regard de la couche réflectrice. On voit le dispositif D1 de ce détecteur, identique au dispositif D1 de la figure 1 (les mêmes composants ayant les mêmes références). On voit également la couche mince 20 séparant ce dispositif D1 du dispositif D2 qui comprend, dans l'exemple représenté, une couche ferroélectrique 82 comprise entre deux armatures conductrices 84 et 86. Ces armatures 84 et 86 se prolongent par des bras d'isolement 87 et 88 permettant le maintien du détecteur à une distance fixe du substrat et la fixation de ce détecteur à ce substrat à travers une couche de passivation 90 formée sur ce substrat. Le détecteur est mis sous vide ou sous gaz faiblement conducteur de la chaleur dans l'exemple représenté et il en est donc de même pour la cavité 72. Dans le détecteur de la figure 7, le micropont est formé par sous-gravure du substrat de silicium sous le détecteur, isolant ainsi partiellement ce détecteur du substrat.

Dans l'exemple de la figure 8, on voit également un substrat en silicium 92 muni d'une circuit de lecture non représenté. Le détecteur thermique conforme à l'invention surplombe ce substrat 92. En regard de ce détecteur se trouve une couche réflectrice 94 placée sur une couche de passivation 96 qui recouvre ce substrat. On voit l'élément résistif du détecteur, comprenant une couche semiconductrice ou métallique 98 formée sur la couche mince 20 et munie de deux électrodes 102 et 104 comprises entre ces couches 98 et 20. Une couche 106 capable d'absorber le rayonnement infrarouge 2 est éventuellement placée au-dessus de la couche 98 (et de la couche 20 munie des électrodes 6 et 8 dans le cas de la figure 7). Les deux électrodes 102 et 104 se prolongent par des bras d'isolement 108 et 110 permettant aussi la fixation du détecteur au substrat à travers la couche de passivation et pourvus de métallisations pour assurer les contacts électriques des électrodes 102 et 104 avec le circuit d'adressage et de lecture. Le thermomètre 112 du détecteur est également muni de deux électrodes 114 et 116 se prolongeant par deux bras 118 et 120 qui sont en contact avec le substrat à travers la couche de passivation et pourvus de métallisations pour assurer les contacts électriques des électrodes 114 et 116 avec le circuit d'adressage et de lecture. Ce détecteur est également placé sous vide ou sous gaz faiblement conducteur de la chaleur. Le micropont est formé à partir d'une couche sacrificielle, typiquement en polyimide, sur laquelle a été élaboré le détecteur, et finalement attaquée comme le montre la figure 8.

On précise que les couches minces (0,05 $\mu$m à 1 $\mu$m) des éléments en matériau isolant (par exemple SiN, SiO, ZnS) et des éléments en matériau semiconducteur amorphe ou polycristallin (par exemple oxydes de vanadium comme $V_2O_5$ ou $VO_2$ élaborés dans une phase semiconductrice, Si, Ge, SiC, Si:H, SiGe:H, SiC:H, $Bi_2Te_3$), sont obtenues à l'aide des techniques de dépôt à basse température habituellement utilisées pour ces matériaux : dépôt sol-gel, pulvérisation cathodique, décomposition thermique (LPCVD) ou dépôt assisté par plasma (PECVD).

Le dopage éventuel de ces couches et réalisé en introduisant un gaz dopant (par exemple $BF_3$ ou $PH_3$) dans le réacteur ou bien par implantation ionique. La gravure de ces matériaux est réalisable par des procédés d'attaque chimique assistée ou non par plasma.

Les matériaux métalliques en couches minces (par exemple Ti, TiN, Pt, Al, Pd, Ni, NiCr, W, WSi, Sb, Bi) constituant les thermopiles, les éléments résistifs, les électrodes et les diverses métallisations, sont également déposés par pulvérisation cathodique ou par décomposition thermique (LPCVD) ou par dépôt assisté par plasma (PECVD). Ces métallisations sont définies par des procédés de gravure chimique, par des procédés de gravure par plasma ou par un procédé de $\langle\langle$ lift-off $\rangle\rangle$. L'épaisseur de ces couches est comprises entre 0,005 $\mu$m et 1 $\mu$m.

Les polymères ferroélectriques (PVDF et PVDF-TrFE) sont déposés en couches minces de 0,05 $\mu$m et 1 $\mu$m par centrifugation.

En l'absence d'un absorbeur au sommet d'un détecteur, les électrodes du dispositif D1 jouent, avec le réflecteur 82 ou 94, un rôle essentiel dans l'absorption du rayonnement 2. Aussi, de même que pour l'absorbeur, la résistance par carré des couches permettant de former les électrodes des dispositifs D1 et D2 et la distance entre ces électrodes et le réflecteur doivent être maîtrisées de manière à réaliser une cavité quart d'onde conduisant au maximum d'absorption à la longueur d'onde de 10 $\mu$m environ (dans le cas d'un rayonnement 2 infrarouge).

Ces électrodes peuvent être connectées au circuit de lecture par des procédés classiques de reprise de contact et peuvent être adaptées à la structure du micropont dans le cas des figures 7 et 8.

Les détecteurs conformes à l'invention les plus performants sont ceux qui présentent la meilleure structure bolométrique (dispositif D1) à savoir : (a) un bon isolement thermique par l'utilisation de matériaux à faible conductivité thermique et d'une structure de bras propice à cet isolement thermique conduisant à une résistance thermique 1/G (inverse de la conductance G) élevée, de $5\times10^5$ à $5\times10^7$ K/W, (b) un matériau bolométrique à forte énergie d'activation $E_a$ qui dépend entre autres du dopage (les matériaux les plus intéressants étant les oxydes de vanadium, le silicium amorphe et le SiGe amorphe) et (c) une bonne efficacité par l'utilisation d'une cavité quart d'onde délimitée, dans le dispositif de la figure 7 (ou de la 8) placé sous vide, par la couche réflectrice 74 (ou la couche 94).

**Revendications**

1. Détecteur thermique, comprenant :

 - un élément résistif (4; 22, 24) qui est apte à subir un échauffement induit par le rayonnement thermique à détecter et muni de moyens de polarisation électrique (6, 8; 26, 28) adaptés pour amplifier cet échauffement par un effet d'emballement thermique,
- **caractérisé en ce qu'**il comprend un thermomètre (12; 34, 36; 40, 42, 44, 46; 51, 52, 54; 60, 62) qui est thermiquement couplé à mais électriquement isolé de l'élément résistif et qui est apte à convertir une variation de température subie par ce thermomètre en un signal électrique, et
- des moyens (18) de lecture de ce signal électrique.

2. Détecteur selon la revendication 1, dans lequel l'élément résistif comprend au moins une couche résistive (4; 22, 24) et les moyens de polarisation comprennent deux électrodes (6, 8; 26, 28), l'ensemble formé par cette couche et ces deux électrodes étant électriquement isolé du thermomètre.

3. Détecteur selon la revendication 2, dans lequel les électrodes sont placées d'un même côté de la couche résistive.

4. Détecteur selon la revendication 2, dans lequel les électrodes sont placées de part et d'autre de la couche résistive.

5. Détecteur selon l'une quelconque des revendications 1 à 4, dans lequel l'élément résistif a un coefficient de température négatif, la polarisation étant alors une polarisation en tension.

6. Détecteur selon la revendication 5, dans lequel l'élément résistif est fait d'un matériau choisi dans le groupe comprenant les oxydes de vanadium, le silicium amorphe et le SiGe amorphe.

7. Détecteur selon l'une quelconque des revendications 1 à 4, dans lequel l'élément résistif a un coefficient de température positif, la polarisation étant alors une polarisation en courant.

8. Détecteur selon l'une quelconque des revendications 1 à 7, dans lequel le thermomètre est choisi dans le groupe comprenant les thermopiles (34, 36), les jonctions p-n, les barrières de Schottky, les résistances électriques, les thermomètres ferroélectriques (51, 52, 54), les thermomètres pyroélectriques, les thermomètres à déformation mécanique (42, 44, 46, 48), notamment les thermomètres pneumatiques, et les thermomètres à au moins une micropointe (60).

9. Détecteur selon l'une quelconque des revendications 1 à 8, ayant une structure de micropont.

10. Détecteur thermique à structure matricielle, comprenant au moins deux détecteurs (68) selon l'une quelconque des revendications 1 à 9.

11. Détecteur thermique selon l'une quelconque des revendications 1 à 10, dans lequel chaque élément résistif est prévu pour subir un échauffement au moyen d'un rayonnement infrarouge (2).

**Claims**

1. Thermal detector, comprising :

- a resistive element (4 ; 22, 24) able to undergo a heating resulting from the thermal radiation to be detected, and provided with electrical biasing means (6, 8 ; 26, 28) adapted for amplifying said heating by a thermal runaway effect,
- **characterized in that** it comprises a thermometer (12 ; 34, 36 ; 40, 42, 44, 46 ; 51, 52, 54 ; 60, 62) thermally coupled to but electrically insulated from the resistive element and able to convert a temperature variation undergone by said thermometer into an electric signal and
- means (18) for reading said electric signal.

2. Detector according to claim 1, wherein the resistive element comprises at least one resistive layer (4 ; 22, 24) and the biasing means comprise two electrodes (6, 8 ; 26, 28), the assembly formed by said layer and said two electrodes being electrically insulated from the thermometer.

3. Detector according to claim 2, wherein the electrodes are placed on the same side of the resistive layer.

4. Detector according to claim 2, wherein the electrodes are placed on either side of the resistive layer.

5. Detector according to any one of claims 1 to 4, wherein the resistive element has a negative temperature coefficient, the biasing then being a voltage biasing.

6. Detector according to claim 5, wherein the resistive element is made from a material chosen from within the group including oxides of vanadium, amorphous silicon and amorphous SiGe.

7. Detector according to any one of claims 1 to 4, wherein the resistive element has a positive temperature coefficient, the biasing then being a current biasing.

8. Detector according to any one of claims 1 to 7, wherein the thermometer is chosen from within the group including thermopiles (34, 36), p-n junctions, Schottky barriers, electrical resistors, ferroelectric thermometers (51, 52, 54), pyroelectric thermometers, mechanical deformation thermometers (42, 44, 46, 48), more particularly pneumatic thermometers, and thermometers having at least one microtip (60).

9. Detector according to any one of claims 1 to 8, which has a microbridge structure.

10. Thermal detector having a matrix structure, comprising at least two detectors (68) according to any one of claims 1 to 9.

11. Thermal detector according to any one of claims 1 to 10, wherein each resistive element is provided for undergoing heating by means of an infrared radiation (2).

**Patentansprüche**

1. Thermischer Detektor, umfassend:

   - ein resistives Element (4; 22, 24), vorgesehen für eine durch die zu detektierende thermische Strahlung induzierte Erwärmung und ausgestattet mit angepassten elektrischen Polarisationseinrichtungen (6, 8; 26, 28), um diese Erwärmung durch einen thermischen Durchgeh-Effekt zu verstärken,
   - ein Thermometer (12; 34, 36; 40, 42, 44, 46; 51, 52, 54; 60, 62), mit dem resistiven Element thermisch gekoppelt aber von ihm elektrisch isoliert und fähig, eine Temperaturveränderung, der dieses Thermometer ausgesetzt ist, in ein elektrisches Signal umzuwandeln, und
   - Leseeinrichtungen (18) dieses elektrischen Signals.

2. Detektor nach Anspruch 1, bei dem das resistive Element wenigstens eine resistive Schicht (4; 22, 24) umfasst und die Polarisationseinrichtungen zwei Elektroden (6, 8; 26, 28) umfassen, wobei das durch diese Schicht und diese beiden Elektroden gebildete Ganze von dem Thermometer elektrisch isoliert ist.

3. Detektor nach Anspruch 2, bei dem sich die Elektroden auf derselben Seite der resistiven Schicht befinden.

4. Detektor nach Anspruch 2, bei dem sich die Elektroden auf beiden Seiten der resistiven Schicht befinden.

5. Detektor nach einem der Ansprüche 1 bis 4, bei dem das resistive Element einen negativen Temperaturkoeffizienten hat und die Polarisation dann eine Spannungspolarisation ist.

6. Detektor nach Anspruch 5, bei dem das resistive Element aus einem Material gemacht ist, das aus der Gruppe ausgewählt ist, die Vanadium, amorphes Silizium und amorphes SiGe umfasst.

7. Detektor nach einem der Ansprüche 1 bis 4, bei dem das resistive Element einen positiven Temperaturkoeffizienten hat und die Polarisation dann eine Strompolarisation ist.

8. Detektor nach einem der Ansprüche 1 bis 7, bei dem das Thermometer aus der Gruppe ausgewählt ist, welche die thermoelektrischen Umwandler (34, 36), die p-n-Übergänge, die Schottky-Barrieren, die elektrischen Widerstände, die ferroelektrischen Thermometer (51, 52, 54) die pyroelektrischen Thermometer, die mechanischen Verformungsthermometer (42, 44, 46, 48), insbesondere die pneumatischen Thermometer, und die Thermometer mit mindestens einer Mikrospitze (60) umfasst.

9. Detektor nach einem der Ansprüche 1 bis 8 mit einer Mikrobrückenstruktur.

10. Thermischer Detektor mit Matrixstruktur, wenigstens zwei Detektoren (68) nach einem der Ansprüche 1 bis 9 umfassend.

11. Thermischer Detektor nach einem der Ansprüche 1 bis 10, bei dem jedes resistive Element vorgesehen ist, einer Erwärmung durch eine Infrarot-Strahlung (2) ausgesetzt zu werden.

FIG. 1A

FIG. 1B

FIG. 2

FIG. 3

FIG. 4

FIG. 6

FIG. 5 A

FIG. 5 B

14

FIG. 7

FIG. 8

**RÉFÉRENCES CITÉES DANS LA DESCRIPTION**

**Documents brevets cités dans la description**

- GB 1267848 A
- GB 2207501 A
- DE 4403947
- FR 9507151
- FR 9610005

**Littérature non-brevet citée dans la description**

- **M. Hamid.** Polyconductor beam power sensor. *Int. J. of Electronics,* vol. 71 (2), 363-381